# EUROPÄISCHE PATENTSCHRIFT

(11) **EP 2 294 131 B1**
(45) Veröffentlichungstag und Bekanntmachung des Hinweises auf die Patenterteilung: **03.06.2020**
(21) Anmeldenummer: 09769227.1
(22) Anmeldetag: 23.06.2009
(51) Int. Cl.: C08L 53/02, C08F 297/04

(54) **STYROL-BUTADIEN-BLOCKCOPOLYMERMISCHUNGEN FÜR SCHRUMPFFOLIEN**
STYRENE BUTADIENE BLOCK COPOLYMER MIXTURES FOR SHRINK-WRAP FILMS
MÉLANGES DE COPOLYMÈRES BLOCS STYRÈNE-BUTADIÈNE POUR FILMS RÉTRACTABLES

(30) Priorität: 27.06.2008 EP 08159247
(43) Veröffentlichungstag der Anmeldung: 16.03.2011
(73) Patentinhaber: INEOS Styrolution Europe GmbH, 60325 Frankfurt am Main (DE)
(72) Erfinder: MÜLLER, Matthias, 64319 Pfungstadt (DE); KNOLL, Konrad, 68199 Mannheim (DE); MEHLER, Christof, 69221 Dossenheim (DE); STEININGER, Helmut, 67551 Worms (DE); GÜNTHERBERG, Norbert, 67346 Speyer (DE); WAGNER, Daniel, 67098 Bad Dürkheim (DE); SCHUSTER, Michael, 67167 Erpolzheim (DE); VERLINDEN, Geert, B-9190 Stekene (BE); GREGER, Florian, 67158 Ellerstadt (DE)
(74) Vertreter: Jacobi, Markus Alexander
(86) Internationale Anmeldenummer: PCT/EP2009/057771
(87) Internationale Veröffentlichungsnummer: WO 2009/156378

(56) Entgegenhaltungen:
- EP-A- 0 436 225
- EP-A- 0 852 240
- EP-A- 1 498 438
- WO-A-2006/074819
- US-A- 4 386 125
- US-B2- 7 037 980

## Beschreibung

Die Erfindung betrifft eine Mischung gemäß Anspruch 1, sowie deren Verwendung zur Herstellung von Schrumpffolien, sowie Schrumpffolien, die aus der Mischung hergestellt sind. Bevorzugte Ausführungsformen der Erfindung sind in den abhängigen Ansprüchen definiert.

Die Verwendung von Styrol-Butadien-Blockcopolymeren als hitzeschrumpfbare Folien ist beispielsweise aus EP-A 058 952 oder EP-A 436 225 bekannt. Die Folien werden in der Wärme bei ca. 60 bis 100°C auf bis zu über 500% gereckt und der gereckte Zustand nach Abkühlen auf Raumtemperatur fixiert. Nach dem Bedrucken können diese zu Hülsen verarbeitet und beispielsweise über eine Flasche gestülpt werden und in einem Wärmetunnel bei ca. 70 bis 90°C wieder zusammenschrumpfen, wobei sich die Folie an die Flasche anschmiegt.

Schrumpffolien sollten bei der Anwendung in der Wärme nahezu auf die Ausgangsgröße schrumpfen, jedoch gleichzeitig eine hohe Lagerstabilität aufweisen, das heißt sie sollten bei Temperaturen um 20 bis 40°C keinen Schrumpf zeigen. Des weiteren sollten sie neben einer hohen Transparenz auch eine hohe Steifigkeit und Festigkeit aufweisen.

Die EP-A 852240 beschreibt Styrol-Butadien-Blockcopolymere, die nach der Orientierung in der Wärme eine verringerte spontane Schrumpfung bei 30°C aufweisen sollen.

Die US 7 037 980 beschreibt sternförmige Butadien-Styrol-Blockcopolymere mit statischen Styrol-Butadien-Blöcken, die gegenüber reinen Styrolblöcken gleichen Molekulargewichts eine verringerte Glasübergangstemperatur und damit verbessertes Schrumpfverhalten in der Hitze zeigen.

Die WO 2006/074819 beschreibt Styrol-Butadien-Blockcopolymermischungen, die zu lagerstabilen, hitzeschrumpfbaren Folien mit hohem Schrumpfvermögen und hoher Steifigkeit/Festigkeit verarbeitet werden können. Die Folien weisen auch nach dem Recken und Schrumpfen eine hohe Transparenz auf.

Aufgabe der Erfindung war es, Styrol-Butadien-Blockcopolymermischungen zu finden, die neben einer hohen Steifigkeit/Festigkeit und Transparenz ein hohes Schrumpfvermögen bei Anwendungstemperaturen im Bereich von 90°C aufweisen und gleichzeitig ein verringertes spontanes Schrumpfverhalten, auch als "natürlicher Schrumpf" bezeichnet, bei Lagerung über mehrere Tage bis zu 3 Wochen im Bereich von 0 bis 40°C zeigen.

Demgemäß wurde die oben genannte Mischung aus Blockcopolymeren gefunden.

Bevorzugt enthält die Mischung 30 bis 50 Gew.-% des Copolymeren A, 70 bis 50 Gew.-% des Blockcopolymeren B und 0 bis 20 Gew.-% von A und B verschiedene thermoplastische Polymere C.

Neben den Polymeren A, B und gegebenenfalls C kann die Mischung 0 bis 6 Gew.-% üblicher Verarbeitungshilfsmittel D, wie Stabilisatoren, anti-Block Agenzien, Farbstoffe, UV-Absorber etc. und Plastifizierungsmittel enthalten. Als Plastifizierungsmittel können 0 bis 6 Gew.-%, bevorzugt 1 bis 4 Gew.-% eines homogen mischbaren Öls oder Ölgemisches, insbesondere Weißöl oder Dioktyl-Adipat oder deren Mischungen verwendet werden. Besonders gute Schrumpfwerte erhält man bei einem Weißölgehalt der Mischung von 1,5 bis 3,5 Gew.-%, bezogen auf die Gesamtmischung.

### Copolymer A:

Die Mischung enthält 5 bis 95 Gew.-%, bevorzugt 30 bis 50 Gew.-% besonders bevorzugt 35 bis 45 Gew.-% eines Copolymeren A, welches ein oder mehrere Copolymerblöcke (B/S)_{A} aus jeweils 65 bis 95 Gew.-% vinylaromatischen Monomeren und 35 bis 5 Gew.-% Dienen und einer Glasübergangstemperatur Tg_{A} im Bereich von 40° bis 90°C enthält

Bevorzugt besteht das Copolymere A aus einem Copolymeren (B/S)_{A}, welches aus 85 bis 93 Gew.-% eines vinylaromatischen Monomeren, insbesondere Styrol und 7 bis 15 Gew.-% eines Diens, insbesondere Isopren oder Butadien aufgebaut ist. Besonders bevorzugt ist Butadien.

Die Glasübergangstemperatur des Copolymerblocks (B/S)_{A} liegt bevorzugt im Bereich von 50 bis 80°C besonders bevorzugt 60 bis 75°C. Die Glasübergangstemperatur wird durch die Art, Zusammensetzung und Verteilung der Monomeren beeinflusst und kann durch Differential Scanning Calorimetry (DSC) oder Differential Mechanical Thermal Analysis (DMTA) bestimmt oder bei statistischer Verteilung der Monomeren gemäß der Fox-Gleichung berechnet werden. Für eine genaue Bestimmung mittels DSC richtet man sich üblicherweise an ISO 11357-2 aus und wertet den 2. Zyklus bei einer Aufheizrate von 20 K/min aus.

Bevorzugt werden Copolymere A, welche ein oder mehrere Copolymerblöcke (B/S)_{A} aus vinylaromatischen Monomeren und Dienen mit statistischer Verteilung enthalten. Diese können beispielsweise durch anionische Polymerisation mit Lithiumalkylen in Gegenwart von Randomizern wie Tetrahydrofuran oder Kaliumsalzen erhalten werden. Bevorzugt werden Kaliumsalze mit einem molaren Verhältnis von anionischem Initiator zu Kaliumsalz im Bereich von 25:1 bis 60:1, besonders bevorzugt 30:1 bis 40:1, verwendet. Dadurch kann gleichzeitig ein niedriger Anteil an 1,2-Verknüpfungen der Butadieneinheiten erreicht werden. Geeignete Kaliumsalze sind K-Alkoholate, insbesondere solche, die im Polymerisationslösungsmittel löslich sind wie tert.-Amylat oder Triethylkarbinolat oder andere tertiäre C-reiche Alkoholate.

Bevorzugt liegt der Anteil der 1,2-Verknüpfungen der Butadieneinheiten im Bereich von 8 bis 15%, bezogen auf die Summe der 1,2-, 1,4-cis- und 1,4-trans-Verknüpfungen.

Besonders bevorzugt besteht das Copolymer A aus einem einzigen Copolymerblock (B/S)_{A} oder weist als Blockcopolymer lineare Strukturen, wie S-(B/S)_{A} oder S-(B/S)_{A}-S auf, wobei S jeweils für einen Hartblock aus vinylaromatischen Monomeren steht. Ebenfalls möglich sind Sternpolymere [(B/S)_{A}]ₙ mit n Sternästen, die durch Kopplung mit einem n-funktionellen Kopplungsmittel oder durch Initiierung mit einem n-funktionellen Initiator zugänglich sind. Als Kopplungsmittel geeignet ist z.B. epoxidiertes Pflanzenöl wie epoxidiertes Leinsamen- oder Sojabohnenöl. Man erhält in diesem Fall Sterne mit 3 bis 5 Ästen. ebenfalls bevorzugt sind Sternblockcopolymere [S-(B/S)_{A}]ₙ.

Statistische Polymere (B/S)_{A} können aber auch durch radikalische Polymerisation hergestellt werden

Die gewichtsmittlere Molmasse M_{w} des Copolymerblocks (B/S)_{A} liegt in der Regel im Bereich von 50.000 bis 500.000, bevorzugt im Bereich von 80.000 bis 400.000, besonders bevorzugt im Bereich von 150.000 bis 300.000. Für die Strukturen, wie S-(B/S)_{A} oder S-(B/S)_{A}-S liegt die gewichtsmittlere Molekularmasse M_{w} für jeden Block S bevorzugt im Bereich von 15.000 bis 45.000. Bevorzugt bestehen die Blöcke S aus Styroleinheiten. Bei den anionisch hergestellten Polymeren erfolgt die Kontrolle der Molmasse über das Verhältnis von Monomer- zu Initiatormenge. Initiator kann aber auch mehrfach nach bereits erfolgter Monomerdosierung zugegeben werden, dann erhält man eine bi- oder multimodale Verteilung. Bei radikalisch hergestellten Polymeren wird M_{W} über die Polymerisationstemperatur und/oder den Zusatz von Reglern eingestellt. Die Molekulargewichte werden üblicherweise mittels Gelpermeationschromatographie (GPC) in THF als Lösungsmittel gegenüber Polystyrol als Standard ermittelt. Im Fall der anionischen Polymerisation ist die gewichtsmittlere Molmasse annähernd identisch mit der zahlenmittleren Molmasse.

### Blockcopolymer B

Die erfindungsgemäße Mischung enthält 95 bis 5 Gew.-% eines Blockcopolymeren B, welches mindestens einen Hartblock S aus 95 bis 100 Gew.-% vinylaromatischen Monomeren und 0 bis 5 Gew.-% Dienen, ein oder mehrere Copolymerblöcke (B/S)_{A} aus jeweils 65 bis 95 Gew.-% vinylaromatischen Monomeren und 35 bis 5 Gew.-% Dienen und einer Glasübergangstemperatur Tg_{A} im Bereich von 40° bis 90°C und ein oder mehrere Copolymerblöcke (B/S)_{B} aus jeweils 20 bis 60 Gew.-% vinylaromatischen Monomeren und 80 bis 40 Gew.-% Dienen und einer Glasübergangstemperatur Tg_{B} im Bereich von -80° bis 0°C, bevorzugt im Bereich von - 70°C bis -20°C, besonders bevorzugt -70 bis -40°C, enthält.

Als Blockcopolymere B eignen sich insbesondere steife Blockcopolymere, welche aus 60 bis 90 Gew.-%, bevorzugt 65 bis 75 Gew.-% vinylaromatischen Monomeren, insbesondere Styrol und 10 bis 40 Gew.-%, bevorzugt 25 bis 35 Gew.-% Dien, insbesondere Butadien, jeweils bezogen auf das gesamte Blockcopolymer, bestehen.

Das Blockcopolymere B der erfindungsgemäßen Mischung weist somit mindestens einen als Hartblock wirkenden Copolymerblock (B/S)_{A} und mindestens einen als Weichblock wirkenden Block (B/S)_{B} auf. Der Copolymerblock (B/S)_{A} entspricht in seiner Zusammensetzung und Eigenschaften den oben für das Copolymer A) beschriebenen Copolymerblock (B/S)_{A}.

Die Copolymerblöcke (B/S)_{B} des Blockcopolymeren B weisen bevorzugt eine zahlenmittlere Molmasse Mₙ im Bereich von 10.000 bis 40.000 g/mol auf, besonders bevorzugt 20.000 bis 30.000 g/mol.

Die Hartblöcke S des Blockcopolymeren B weisen eine zahlenmittlere Molmasse Mₙ im Bereich von 5.000 bis 30.000 g/mol auf. Die Blöcke können sowohl endständig (Sₑ) als auch zwischen (Sᵢ) den Copolymerblöcken (B/S)_{A} und (B/S)_{B} auftreten. Der kurze Sᵢ-Block bewirkt eine maximale Unverträglichkeit mit dem als Weichphase wirkenden Copolymerblock (B/S)_{B}. Dadurch kann die sich im Festkörper ausbildende Zwischenphase zwischen der Hart- und Weichphase klein gehalten werden. Das bedeutet, dass der Massenanteil an Phasen, die im Bereich der Zimmertemperatur, d.h. zwischen 10 bis 40°C erweichen, klein gehalten wird. Die Molekulargewichte werden üblicherweise mittels Gelpermeationschromatographie (GPC) in THF als Lösungsmittel gegenüber Polystyrol als Standard ermittelt.

Die Blockcolymere B sind sternförmige Blockcopolymere, in denen im wesentlichen kurze Sternäste der Struktur Sₑ-(B/S)_{B} und lange Sternäste der Struktur (B/S)_{A}-Sᵢ-(B/S)_{B} vorhanden sind, welche über die Weichblöcke (B/S)_{B} verknüpft sind. Wahlweise kann vor der Verknüpfung ein kurzer Polystyrolblock mit einer zahlenmittleren Molmasse Mₙ kleiner als 2500 g/mol zur Verbesserung des Zähigkeits-Steifigkeitsverhältnisses eingebaut werden. Bei der bevorzugten Herstellung solcher sternförmigen Blockcopolymeren durch sequentielle anionische Polymerisation mit zweifacher Initiierung, weisen die Blöcke Sₑ und Sᵢ die gleiche Zusammensetzung und zahlenmittlere Molmassen Mₙ auf.

Die Copolymerblöcke (B/S)_{B} des Blockcopolymeren B weisen bevorzugt eine statistische Verteilung der vinylaromatischen Monomeren und Dienen auf.

Die Blockcopolymere B weisen eine sternförmige Struktur mit endständigen Hartblöcken S₁ und (B/S)_{B} auf. Der Anteil der Summe aller Hartblöcke S und (B/S)_{B} liegt im Blockcopolymer B bei mindestens 40 Gew.-%, insbesondere 50 bis 70 Gew.-%, besonders bevorzugt 57 bis 67 Gew.-%, bezogen auf das gesamte Blockcopolymer B.

Thermoplastische Polymere C Als thermoplastische Polymere C enthält die erfindungsgemäße Mischung 0 bis 45 Gew.-%, bevorzugt 1 bis 30 Gew.-%, besonders bevorzugt 5 bis 20 Gew.-% eines von A und B verschiedenen thermoplastischen Polymeren oder Polymermischungen. Geeignete thermoplastische Polymere C sind insbesondere Styrolpolymere, wie Standardpolystyrol (GPPS) oder Schlagzähpolystyrol (HIPS), Styrol-Acrylnitril-copolymere (SAN), Styrol-Methylmethacrylatcopolymere (S/MMA) oder Polymethylacrylate, wie PMMA., Polyester wie Polyetheylentherephtalat (PET), Polyolefine, wie Polyethylen, Polypropylen oder Polyvinylchlorid (PVC) oder semikristalline Werkstoffe. Weiter denkbar sind Polyacrylate, wie PnBA und andere Acrylatkautschuke, Ethylvinylacetat-Polymerer (EVA) etc. Die thermoplastischen Polymeren C können zu einer Verbesserung der Steifigkeit, Medienbeständigkeit, Bedruckbarkeit, Antiblockeigenschaften, Recyclingfähigkeit, Klingeigenschaften zugemischt werden

Ferner können thermoplastische Elastomere (TPE), beispielsweise von A un B verschiedene lineare oder sternförmige, hydrierte oder nicht hydrierte Styrol-Butadien- oder Styrol-Isoprene-Blockcopolymere, wie Zwei- und Dreiblockcopolymere, eingesetzt werden. Geeignete Blockcopolymere sind im Handel unter der Bezeichnung Kraton® D, Kraton® G oder Styroflex® erhältlich. Der Zusatz von thermoplastischen Elastomeren bewirkt in der Regel eine Verbesserung der Zähigkeit der erfindungsgemäßen Mischung.

Die erfindungsgemäßen Mischungen sind hoch transparent und eignen sich insbesondere zur Herstellung von Schrumpffolien. Sie sind lagerstabil und zeigen bei 0°C bis 40°C einen sehr niedrigen Schrumpf selbst über mehrere Wochen. Im Bereich von 90 bis 100°C ist der Schrumpfgrad hoch, was eine flexible Anpassung an die Verarbeitungsbedingungen sowie das Umhüllen von stark bauchigen Formen ermöglicht.

Besonders geeignet ist die erfindungsgemäße Mischung auch zur Herstellung von Mehrschichtfolien durch Coextrusion. Für die einzelnen Schichten eignen sich ebenfalls die oben genannten thermoplastischen Polymeren C, wobei die erfindungsgemäße Mischung als Trägerschichten oder als Außenschichten eingesetzt werden können. Die zusätzlichen Schichten werden insbesondere zur Oberflächenmodifizierung, Anti-Block-Eigenschaften, höhere Steifigkeit, veränderte/reduzierte Permeabilität.

### Beispiele:

### Blockcopolymer A

Zur Herstellung des linearen Styrol-Butadien-Blockcopolymeren A der Struktur B/S wurden 2991 ml Cyclohexan vorgelegt, bei 60°C mit 1,6 ml sec-Butyllithium (BuLi) austitriert und anschließend mit 3,25 ml einer 1,4 M sec.-Butyl-lithium-Lösung zur Initiierung und 1,26 ml einer 0,1175 M Kalium-tert.-Amylat (KTA)-Lösung als Randomizer versetzt und auf 40°C abgekühlt. Polymerisiert wurde in zwei Portionen. Hierzu wurden zweimal je 450 g Styrol und 50 g Butadien gleichzeitig zugegeben und die Maximaltemperatur durch Gegenkühlen auf 75°C begrenzt. Danach wurden die lebenden Polymerketten durch Zugabe von 0,72 ml Isopropanol terminiert, mit CO₂/Wasser angesäuert und eine Stabilisatorlösung zugegeben. Das Cyclohexan wurde im Vakuumtrockenschrank eingedampft. Das mittels GPC ermittelte zahlenmittlere Molekulargewicht Mₙ betrug 220.000 g/mol. Das Blockopolymer A enthält 5 Gew.-% Weißöl.

### Vergleichsversuch:

Ein sternförmiges Blockcopolymer V1 (26 Gew.-% Butadien, 74 Gew.-% Styrol) mit statistischen Copolymerblöcken B/S wurde durch sequentielle anionische Polymerisation von Styrol und Butadien und anschließende Kopplung mit expoxidiertem Leinöl entsprechend Beispiel 15 aus WO 00/58380 hergestellt.

### Blockcopolymer B1 bis B12

Die sternförmigen Blockcopolymeren B1 bis B12 wurden nach den Angaben in Tabelle 2 durch sequentielle anionische Polymerisation und anschließender Zugabe eines Kopplungsmittels hergestellt. 4785 ml Cyclohexan wurden vorgelegt, bei 60°C mit 1,6 ml sec-Butyllithium (BuLi) austitriert, auf 40°C abgekühlt und anschließend mit 7,33 ml einer 1,4 M sec.-Butyl-lithium-Lösung (s-BuLi 1) zur Initiierung (I₁) und 4,1 ml einer 0,293 M Kalium-tert.-Amylat (KTA)-Lösung als Randomizer versetzt. Zur Bildung des Copolymerblockes (B/S)_{A} wurden die in Tabelle 3 angegebenen Mengen Styrol 1 und Butadien 1 zugegeben. Nach Beendigung der Polymerisation wurden eine zweite Initiatormenge I₂ von 18,33 ml einer 1,4 M sec.-Butyl-lithium-Lösung (s-BuLi 2)und nacheinander Styrol 2 und eine Mischung von Styrol 3 und Butadien 4 (Copolymerblock (B/S)_{B}) sowie Styrol 4 zugegeben und polymerisiert. Zum Schluss wurden 5,6 ml Edenol® D82 als Kopplungsmittel in Cylohexan zugegeben und mit 0,5 ml i-Propanol terminiert, mit CO₂/Wasser angesäuert und eine Stabilisatorlösung (Irganox® 1010) zugegeben. Die mittels GPC ermittelten zahlenmittleren Molekulargewichte der einzelnen Blöcke in den Blockcopolymeren B2 bis B13 sind in Tabelle 2 zusammengestellt.

### Blockcopolymere B13 bis B 25

Die Blockcopolymeren B 13 bis B 25 wurden analog den vorangegangen Beispielen unter Verwendung der gleichen Einsatzstoffe hergestellt, wobei jedoch abweichend eine 0.847 M Lösung eingesetzt wurde. Die eingesetzten Mengen sind den Tabellen 1 und 4 zusammengestellt. Die mittels GPC (Lösungsmittel THF, Polystyrolstandard) ermittelten zahlenmittleren Molekulargewichte der einzelnen Blöcke in den Blockcopolymeren B 13 bis B 25 sind in Tabelle 2 zusammengestellt.

**Tabelle 1:**

| Bsp. | S-BuLi 1 ml [1.4 M] | S-BuLi 2 ml [1.4 M] | Cyclohexan [ml] | KTA [ml] [0,847 M] | Edenol D82 [ml] | i-Propanol [ml] |
|---|---|---|---|---|---|---|
| 13 | 7,33 | 18,33 | 4785 | 2.07 | 5,6 | 0,56 |
| 14 | 5,60 | 16,80 | 5396 | 1.23 | 4,9 | 0,56 |
| 15 | 4,38 | 13,15 | 4856 | 0.94 | 3,87 | 0,5 |
| 16 | 4,48 | 13,44 | 4341 | 0.99 | 3,9 | 0,56 |
| 17 | 5,76 | 14,40 | 4857 | 1.11 | 4,41 | 0,5 |
| 18 | 5,54 | 16,63 | 4856 | 1.35 | 4,8 | 0,56 |
| 19 | 4,38 | 13,15 | 4856 | 0.94 | 3,87 | 0,5 |
| 20 | 4,48 | 13,44 | 4341 | 0.99 | 3,9 | 0,56 |
| 21 | 5,76 | 14,40 | 4857 | 1.11 | 4,41 | 0,5 |
| 22 | 4,90 | 12,24 | 4857 | 0.94 | 3,75 | 0,5 |
| 23 | 4,90 | 12,24 | 4857 | 0.94 | 3,75 | 0,5 |
| 24 | 4,03 | 12,10 | 4316 | 0.89 | 3,5 | 0,56 |
| 25 | 4,03 | 12,10 | 4316 | 0.89 | 3,5 | 0,56 |

**Tabelle 2: Zahlenmittlere Molekulargewichte der einzelnen Blöcke in den Blockcopolymeren B 1 bis B 25**

| Beispiel | Mₙ (B/S)_{A} (Styrol 1/ Butadien 1) | Mₙ S-Block (Styrol 2) | Mₙ (B/S)_{B} (Styrol 3/ Butadien 2) | Mw nach Kopplung | D nach Kopplung |
|---|---|---|---|---|---|
| B1 | 54355 | 13930 | 23570 | 168970 | 2,3 |
| B2 | 46493 | 15809 | 22454 | 157240 | 2,5 |
| B3 | 48247 | 22645 | 23228 | 197750 | 2,2 |
| B4 | 64538 | 16196 | 23082 | 191520 | 1,9 |
| B5 | 57541 | 18424 | 20357 | 162240 | 1,8 |
| B6 | 56050 | 17115 | 24180 | 175580 | 2,4 |
| B7 | 66540 | 16786 | 23023 | 191540 | 1,9 |
| B8 | 50609 | 19413 | 20786 | 152020 | 1,9 |
| B9 | 55961 | 11500 | 24856 | 175810 | 1,8 |
| B10 | 59263 | 19015 | 19913 | 161360 | 1,8 |
| B11 | 52178 | 15809 | 23325 | 176990 | 1,8 |
| B12 | 86508 | 14803 | 20236 | 198430 | 2,2 |
| B13 | 65851 | 14448 | 20122 | 267040 | 2,9 |
| B14 | 82254 | 16153 | 22648 | 248900 | 2,4 |
| B15 | 97694 | 24705 | 26529 | 236445 | 1,9 |
| B16 | 91439 | 12222 | 21072 | 224400 | 2,5 |
| B17 | 71312 | 15716 | 21753 | 230640 | 2,4 |
| B18 | 96890 | 16587 | 22626 | 191860 | 1,9 |
| B19 | 98871 | 26551 | 22508 | 212560 | 1,9 |
| B20 | 109317 | 25559 | 21884 | 239230 | 1,9 |
| B21 | 65178 | 15338 | 21327 | 211880 | 2,5 |
| B22 | 86418 | 19300 | 26742 | 301570 | 3,1 |
| B23 | 83223 | 18260 | 26284 | 241210 | 2,1 |
| B24 | 89322 | 17222 | 23861 | 281920 | 2,8 |
| B25 | 81432 | 15943 | 22965 | 224190 | 2,3 |

### Mischungen M1 bis M59

Die Blockcopolymermischungen wurden jeweils durch Aufschmelzen von 40 Gewichtsteilen des Blockcopolymeren A mit 60 Gewichtsteilen der Blockcopolymeren B1 bis B13 in einem gegenläufigen Zweiwellenextruder bei 200 bis 220°C hergestellt und mit einer Breitschlitzdüse zu 1 mm dicken Folien verarbeitet.

Die mechanischen Werte wie E-Modul und Reißdehnung wurden in Längs- (Extrusionsrichtung) und Querrichtung (quer zur Extrusionsrichtung) nach ISO 527 bestimmt und sind in Tabelle 3 angegeben.

Die Folien wurden in mindestens 10 cm lange und 5 cm breite Streifen geschnitten und mit einer freien Einspannlänge von 5 cm in die Klemmbacken einer Zugprüfmaschine eingelegt. Die Streifen wurden in der Zugprüfmaschine bei 80 °C um den Steckfaktor 5,5 gedehnt und im gereckten Zustand schnell auf 23 °C abgekühlt. Für die Ermittlung der Schrumpfeigenschaften wurden die gereckten Streifen in der Breite gedrittelt oder in mindestens 1 cm breite Streifen geschnitten. An den schmalen Steifen wurden die ultimativen Schrumpfwerte gemäß Tabelle 5 nach 10 sec im Wasserbad bei 90°C ermittelt. Zur Bestimmung des spontanen Schrumpfes wurden die Streifen in einem offenen, wassergefüllten Schraubglas für 4, 14 und 21 Tage in einem auf 40°C thermostatisierten Wasserbad gelagert.

Folien aus den erfindungsgemäßen Mischungen M1 bis M59 zeigen gegenüber der Mischung MV1 als Vergleichsversuch eine deutlich geringeren spontanen Schrumpf nach 21 Tagen Lagerung.

**Tabelle 3: Dosierfolge und Zusammensetzung der sternförmigen Blockcopolymeren B1 bis B12**

| | Styrol 1 [g] | Butadien 1 [g] | Styrol 2 [g] | Styrol 3 [g] | Butadien 2 [g] | Stryrol 4 [g] | Initiatorverhältnis | Butadiengehalt in (B/S)_{B} [Gew.-%] | Butadiengehalt [Gew.-%] |
|---|---|---|---|---|---|---|---|---|---|
| B1 | 489,8 | 54,4 | 341,3 | 221,7 | 496,8 | 41,1 | 1 : 3.0 | 69,1 | 33,5 |
| B2 | 489,9 | 54,4 | 449,1 | 221,7 | 496,8 | 41,1 | 1 : 2.5 | 69,1 | 31,4 |
| B3 | 489,8 | 54,4 | 718,5 | 221,7 | 496,8 | 41,1 | 1 : 2.5 | 69,2 | 27,3 |
| B4 | 581,9 | 64,7 | 449,1 | 221,7 | 496,8 | 41,1 | 1 : 2.5 | 69,1 | 30,3 |
| B5 | 489,8 | 54,4 | 449,1 | 199,5 | 447,1 | 41,1 | 1 : 2.5 | 69,1 | 29,8 |
| B6 | 489,8 | 54,4 | 449,1 | 243,8 | 546,5 | 41,1 | 1 : 2.5 | 69,2 | 32,9 |
| B7 | 489,8 | 54,4 | 449,1 | 239,5 | 479 | 41,1 | 1 : 2.5 | 66,7 | 30,4 |
| B8 | 489,8 | 54,4 | 449,1 | 256,7 | 461,8 | 41,1 | 1 : 2.5 | 64,3 | 29,5 |
| B9 | 489,8 | 54,4 | 449,1 | 211,2 | 507,3 | 41,1 | 1 : 2.5 | 70,6 | 32,0 |
| B10 | 581,9 | 64,7 | 449,1 | 199,5 | 447,1 | 41,1 | 1 : 2.5 | 69,1 | 28,7 |
| B11 | 489,8 | 54,4 | 449,1 | 221,7 | 496,8 | 41,1 | 1 : 2.5 | 69,1 | 31,4 |
| B12 | 581,9 | 64,7 | 449,1 | 199,5 | 447,1 | 41,1 | 1 : 2.5 | 69,1 | 28,7 |

**Tabelle 4: Dosierfolge und Zusammensetzung der sternförmigen Blockcopolymeren B 13 bis B 25**

| | Styrol 1 [g] | Butadien 1 [g] | Styrol 2 [g] | Styrol 3 [g] | Butadien 2 [g] | Styrol 4 [g] | Initiatorverhältnis | Butadiengehalt in (B/S)B [Gew.-%] | Butadiengehalt [Gew.-%] |
|---|---|---|---|---|---|---|---|---|---|
| 13 | 581,9 | 64,7 | 449,1 | 199,6 | 447,1 | 41 | 1 : 2.5 | 69.1% | 28.7 |
| 14 | 611,5 | 67,9 | 454,7 | 196,4 | 437,1 | 36,1 | 1 : 3.0 | 69.0% | 28.0 |
| 15 | 550,4 | 61,1 | 409,2 | 176,8 | 393,4 | 32,5 | 1 : 3.0 | 69.0% | 28.0 |
| 16 | 562,6 | 62,5 | 290,4 | 157,1 | 349,7 | 28,9 | 1 : 3.0 | 69.0% | 28.4 |
| 17 | 550,4 | 61,1 | 409,2 | 176,8 | 393,4 | 32,5 | 1 : 2.5 | 69.0% | 28.0 |
| 18 | 550,4 | 61,1 | 409,2 | 176,8 | 393,4 | 32,5 | 1 : 3.0 | 69.0% | 28.0 |
| 19 | 550,4 | 61,1 | 409,2 | 176,8 | 393,4 | 32,5 | 1 : 3.0 | 69.0% | 28.0 |
| 20 | 562,6 | 62,5 | 290,4 | 157,1 | 349,7 | 28,9 | 1 : 3.0 | 69.0% | 28.4 |
| 21 | 550,4 | 61,1 | 409,2 | 176,8 | 393,4 | 32,5 | 1 : 2.5 | 69.0% | 28.0 |
| 22 | 550,4 | 61,1 | 409,2 | 176,8 | 393,4 | 32,5 | 1 : 2.5 | 69.0% | 28.0 |
| 23 | 550,4 | 61,1 | 409,2 | 176,8 | 393,4 | 32,5 | 1 : 2.5 | 69.0% | 28.0 |
| 24 | 489,2 | 53,8 | 363,8 | 157,4 | 349,7 | 28,9 | 1 : 3.0 | 69.0% | 28.0 |
| 25 | 489,2 | 53,8 | 363,8 | 157,4 | 349,7 | 28,9 | 1 : 3.0 | 69.0% | 28.0 |

**Tabelle 5: Eigenschaften der Polymermischungen M1 bis M59 und MV1**

| | Mischung | Ölgehalt | Ultimativer | Spontaner | in Extrusionsrichtung | | Quer zur Extrusionsrichtung | |
|---|---|---|---|---|---|---|---|---|
| | Teile A/ Teile B [Gew.-Teile] | [Gew.-%] | Schrumpf 90°C [%] | Schrumpf 21d [%] | E-Modul [N/mm²] | Bruchdehnung [%] | E-Modul [N/mm²] | Bruchdehnung [%] |
| MV1 | 40 A1/60 V1 | 5,0 | 69 | 5,9 | 1358 | 358 | 700 | 352 |
| M1 | 40 A1/60 B1 | 2,0 | 69 | 2,9 | 540 | 370 | 341 | 385 |
| M2 | 40 A1/60 B2 | 2,0 | 69 | 2,8 | 942 | 340 | 594 | 361 |
| M3 | 40 A1/60 B3 | 2,0 | 72 | 4,0 | 1720 | 113 | 1569 | 90 |
| M4 | 40 A1/60 B4 | 2,0 | 69 | 3,4 | 1369 | 338 | 894 | 364 |
| M5 | 40 A1/60 B5 | 2,0 | 70 | 3,2 | 1180 | 339 | 863 | 352 |
| M6 | 40 A1/60 B6 | 2,0 | 70 | 3,4 | 1004 | 354 | 634 | 379 |
| M7 | 40 A1/60 B7 | 2,0 | 70 | 3,7 | 1199 | 327 | 589 | 357 |
| M8 | 40 A1/60 B8 | 2,0 | 70 | 3,7 | 1100 | 324 | 852 | 341 |
| M9 | 40 A1/60 B9 | 2,0 | 71 | 3,6 | 1386 | 350 | 720 | 366 |
| M10 | 40 A1/60 B10 | 2,0 | 70 | 3,1 | 1321 | 316 | 1252 | 356 |
| M11 | 40 A1/60 B11 | 2,0 | 69 | 3,3 | 1181 | 347 | 834 | 366 |
| M12 | 40 A1/60 B12 | 2,0 | 69 | 2,4 | 1490 | 255 | 1264 | 308 |
| M13 | 40 A1/60 B13 | 3,5 | 71 | 5,0 | 1286 | 36 | 1184 | 164 |
| M14 | 40 A1/60 B13 | 2,0 | 71 | 4,0 | 1314 | 149 | 1197 | 313 |
| M15 | 40 A1/60 B13 | 2,8 | 72 | 4,4 | 1394 | 78 | 1291 | 310 |
| M16 | 37 A1/63 B13 | 3,4 | 71 | 4,3 | 1327 | 80 | 1153 | 257 |
| M17 | 40 A1/60 B14 | 3,5 | 72 | 4,2 | 1403 | 56 | 1191 | 107 |
| M18 | 40 A1/60 B14 | 2,0 | 72 | 4,3 | 1532 | 189 | 1302 | 271 |
| M19 | 40 A1/60 B14 | 2,8 | 72 | 3,9 | 1508 | 28 | 1274 | 212 |
| M20 | 37 A1/63 B14 | 3,4 | 71 | 3,6 | 1441 | 95 | 1272 | 136 |
| M21 | 37 A1/63 B14 | 1,9 | 71 | 3,4 | 1449 | 244 | 1187 | 274 |
| M22 | 40 A1/60 B15 | 3,5 | 73 | 4,1 | 1574 | 46 | 1199 | 218 |
| M23 | 40 A1/60 B15 | 2,0 | 74 | 4,1 | 1574 | 161 | 1241 | 183 |
| M24 | 40 A1/60 B15 | 2,8 | 74 | 4,2 | 1581 | 138 | 1321 | 291 |
| M25 | 37 A1/63 B15 | 3,4 | 74 | 4,3 | 1510 | 119 | 1108 | 231 |
| M26 | 37 A1/63 B15 | 1,9 | 74 | 4,3 | 1596 | 261 | 1337 | 310 |
| M27 | 40 A1/60 B16 | 3,5 | 74 | 4,9 | 1451 | 57 | 985 | 228 |
| M28 | 40 A1/60 B16 | 2,0 | 73 | 4,2 | 1559 | 276 | 1123 | 289 |
| M29 | 40 A1/60 B16 | 2,8 | 72 | 3,8 | 1468 | 244 | 1003 | 166 |
| M30 | 37 A1/63 B16 | 3,4 | 72 | 4,2 | 1318 | 249 | 949 | 239 |
| M31 | 37 A1/63 B16 | 1,9 | 73 | 3,8 | 1436 | 275 | 1140 | 339 |
| M32 | 40 A1/60 B17 | 3,5 | 72 | 4,2 | 1388 | 24 | 1223 | 164 |
| M33 | 40 A1/60 B17 | 2,0 | 72 | 3,8 | 1456 | 183 | 1436 | 213 |
| M34 | 40 A1/60 B17 | 2,8 | 72 | 3,7 | 1533 | 91 | 1364 | 147 |
| M35 | 37 A1/63 B17 | 3,4 | 71 | 4,0 | 1466 | 10 | 1348 | 112 |
| M36 | 37 A1/63 B17 | 1,9 | 71 | 3,8 | 1512 | 190 | 1320 | 240 |
| M37 | 40 A1/60 B18 | 2,0 | 70 | 3,5 | 1388 | 331 | 829 | 299 |
| M38 | 37 A1/63 B18 | 1,9 | 69 | 4,3 | 1458 | 264 | 973 | 327 |
| M39 | 43 A!/57 B18 | 2,2 | 71 | 3,5 | 1545 | 257 | 983 | 267 |
| M40 | 40 A1/60 B19 | 2,0 | 72 | 4,7 | 1727 | 55 | 1224 | 199 |
| M41 | 37 A1/63 B19 | 1,9 | 71 | 5,1 | 1744 | 186 | 1134 | 243 |
| M42 | 40 A1/60 B20 | 2,0 | 74 | 3,5 | 1632 | 99 | 1428 | 92 |
| M43 | 37 A1/63 B20 | 1,9 | 74 | 3,3 | 1597 | 258 | 1215 | 274 |
| M44 | 43 A1/57 B20 | 2,2 | 75 | 3,3 | 1838 | 44 | 1597 | 67 |
| M45 | 40 A1/60 B21 | 2,0 | 75 | 3,4 | 1599 | 55 | 1456 | 149 |
| M46 | 37 A1/63 B21 | 1,9 | 71 | 3,7 | 1546 | 187 | 1401 | 226 |
| M47 | 43 A1/57 B21 | 2,2 | 72 | 3,5 | 1686 | 16 | 1434 | 58 |
| M48 | 32 A1/68 B24 | 1,6 | 70 | 3,9 | 1282 | 371 | 878 | 384 |
| M49 | 34 A1/66 B25 | 1,7 | 69 | 3,6 | 1291 | 291 | 972 | 303 |
| M50 | 36 A1/64 B24 | 1,8 | 70 | 3,5 | 1400 | 354 | 1071 | 304 |
| M51 | 38 A1/62 B25 | 1,9 | 70 | 3,5 | 1580 | 303 | 1033 | 330 |
| M52 | 40 A1/60 B24 | 2,0 | 71 | 3,5 | 1647 | 274 | 1110 | 301 |
| M53 | 42 A1/58 B25 | 1,9 | 72 | 3,1 | 1453 | 262 | 1107 | 163 |
| M54 | 32 A1/68 B22 | 1,6 | 71 | 3,7 | 1425 | 328 | 1141 | 264 |
| M55 | 34 A1/66 B23 | 1,7 | 71 | 4,0 | 1679 | 282 | 1221 | 136 |
| M56 | 36 A1/64 B22 | 1,8 | 71 | 3,7 | 1628 | 289 | 1312 | 302 |
| M57 | 38 A1/62 B23 | 1,9 | 73 | 3,7 | 1564 | 260 | 1298 | 201 |
| M58 | 40 A1/60 B22 | 2,0 | 72 | 3,2 | 1574 | 268 | 1345 | 231 |
| M59 | 42 A1/58 B23 | 1,9 | 72 | 3,8 | 1733 | 145 | 1354 | 84 |

## Patentansprüche

1. Mischung enthaltend
a) 5 bis 95 Gew.-% eines Copolymeren A, welches ein oder mehrere Copolymerblöcke (B/S)_{A} aus jeweils 65 bis 95 Gew.-% vinylaromatischen Monomeren und 35 bis 5 Gew.-% Dienen und einer Glasübergangstemperatur Tg_{A} im Bereich von 40° bis 90°C enthält,
b) 95 bis 5 Gew.-% eines Blockcopolymeren B, welches mindestens einen Hartblock S aus 95 bis 100 Gew.-% vinylaromatischen Monomeren und 0 bis 5 Gew.-% Dienen, ein oder mehrere Copolymerblöcke (B/S)_{A} aus jeweils 65 bis 95 Gew.-% vinylaromatischen Monomeren und 35 bis 5 Gew.-% Dienen und einer Glasübergangstemperatur Tg_{A} im Bereich von 40° bis 90°C und ein oder mehrere Copolymerblöcke (B/S)_{B} aus jeweils 20 bis 60 Gew.-% vinylaromatischen Monomeren und 80 bis 40 Gew.-% Dienen und einer Glasübergangstemperatur Tg_{B} im Bereich von -80° bis 0°C enthält,
c) 0 bis 45 Gew.-% von A und B verschiedener thermoplastischer Polymeren C und
d) 0 bis 6 Gew.-% Verarbeitungshilfsmittel D,
wobei die Summe aus A bis D 100 Gew.-% ergibt;
• die Hartblöcke S des Blockcopolymeren B eine zahlenmittlere Molmasse Mₙ im Bereich von 5.000 bis 30.000 g/mol aufweisen;
• das Blockcopolymere B eine sternförmige Struktur mit endständigen Hartblöcken Sₑ und (B/S)_{A} aufweist und der Anteil der Summe aller Hartblöcke S und (B/S)_{A} mindestens 40 Gew.-%, bezogen auf das gesamte sternförmige Blockcopolymer B, beträgt; und
• das sternförmige Blockcopolymere B im wesentlichen kurze Sternäste der Struktur Sₑ-(B/S)_{B} und lange Sternäste der Struktur (B/S)_{A}-Si-(B/S)_{B}, welche über die Weichblöcke (B/S)_{B} verknüpft sind, aufweist.

2. Mischung nach Anspruch 1, **dadurch gekennzeichnet, dass** sie
a) 30 bis 50 Gew.-% des Copolymeren A,
b) 70 bis 50 Gew.-% des Blockcopolymeren B und
c) 0 bis 20 Gew.-% thermoplastische Polymere C enthält.

3. Mischung nach Anspruch 1 oder 2, **dadurch gekennzeichnet, dass** die Copolymerblöcke (B/S)_{A} des Blockcopolymeren A eine gewichtsmittlere Molmasse M_{w} im Bereich von 150.000 bis 300.000 aufweisen.

4. Mischung nach einem der Ansprüche 1 bis 3, **dadurch gekennzeichnet, dass** die Copolymerblöcke (B/S)_{A} der Blockcopolymeren A und B eine Glasübergangstemperatur im Bereich von 50° bis 80°C aufweist.

5. Mischung nach einem der Ansprüche 1 bis 4, **dadurch gekennzeichnet, dass** das Copolymere A aus einem Copolymerblock (B/S)_{A} aus 85 bis 93 Gew.-% Styrol und 7 bis 15 Gew.-% Butadien besteht.

6. Mischung nach einem der Ansprüche 1 bis 4, **dadurch gekennzeichnet, dass** die Copolymerblöcke (B/S)_{B} des Blockcopolymeren B eine zahlenmittlere Molmasse Mₙ im Bereich von 10.000 bis 40.000 g/mol aufweisen.

7. Mischung nach einem der Ansprüche 1 bis 6, **dadurch gekennzeichnet, dass** die Copolymerblöcke (B/S)_{A} und (B/S)_{B} der Blockcopolymeren A und B eine statistische Verteilung der vinylaromatischen Monomeren und Dienen aufweisen.

8. Mischung nach Anspruch 1, wobei das sternförmige Blockcopolymere B im wesentlichen kurze Sternäste der Struktur Sₑ-(B/S)_{B} und lange Sternäste der Struktur (B/S)_{A}-Sᵢ-(B/S)_{B}, welche über die Weichblöcke (B/S)_{B} verknüpft sind, aufweist und vor der Verknüpfung ein kurzer Polystyrolblock mit einer zahlenmittleren Molmasse Mₙ kleiner als 2500 g/mol eingebaut wird.

9. Verwendung der Mischung nach einem der Ansprüche 1 bis 8 zur Herstellung von Schrumpffolien.

10. Schrumpffolie, hergestellt aus einer Mischung nach einem der Ansprüche 1 bis 8.

## Claims

1. Mixture comprising
a) from 5 to 95% by weight of a copolymer A which comprises one or more copolymer blocks (B/S)_{A} each composed of from 65 to 95% by weight of vinylaromatic monomers and from 35 to 5% by weight of dienes and of a glass transition temperature Tg_{A} determined according to description in the range from 40° to 90°C,
b) from 95 to 5% by weight of a block copolymer B which comprises at least one hard block S composed of from 95 to 100% by weight of vinylaromatic monomers and of from 0 to 5% by weight of dienes, and comprises one or more copolymer blocks (B/S)_{A} each composed of from 65 to 95% by weight of vinylaromatic monomers and of from 35 to 5% by weight of dienes and of a glass transition temperature Tg_{A} in the range from 40° to 90°C, and comprises one or more copolymer blocks (B/S)_{B} each composed of from 20 to 60% by weight of vinylaromatic monomers and of from 80 to 40% by weight of dienes and of a glass transition temperature Tg_{B} in the range from -80° to 0°C,
c) from 0 to 45% by weight of thermoplastic polymers C other than A and B, and
d) from 0 to 6% by weight of processing aids D, where the entirety of A to D gives 100% by weight;
• the number-average molar mass Mₙ determined according to description of the hard blocks S of the block copolymer B is in the range from 5000 to 30 000 g/mol;
• the block copolymer B has a star-shaped structure having terminal hard blocks Sₑ and (B/S)_{A}, and the proportion of the entirety of all of the hard blocks S and (B/S)_{A} is at least 40% by weight, based on the entire star-shaped block copolymer B; and
• the star of the star-shaped block copolymer B has in essence short branches of structure Sₑ-(B/S)_{B} and long branches of structure (B/S)_{A}-Sᵢ-(B/S)_{B}, linked by way of the soft blocks (B/S)_{B}.

2. Mixture according to Claim 1, **characterized in that** it comprises
a) from 30 to 50% by weight of the copolymer A,
b) from 70 to 50% by weight of the block copolymer B, and
c) from 0 to 20% by weight of thermoplastic polymers C.

3. Mixture according to Claim 1 or 2, **characterized in that** the weight-average molecular weight M_{w} determined according to the description of the copolymer blocks (B/S)_{A} of the block copolymer A is in the range from 150 000 to 300 000.

4. Mixture according to any of Claims 1 to 3, **characterized in that** the glass transition temperature of the copolymer blocks (B/S)_{A} of the block copolymers A and B is in the range from 50° to 80°C.

5. Mixture according to any of Claims 1 to 4, **characterized in that** the copolymer A is composed of a copolymer block (B/S)_{A} composed of from 85 to 93% by weight of styrene and from 7 to 15% by weight of butadiene.

6. Mixture according to any of Claims 1 to 4, **characterized in that** the number-average molar mass Mₙ determined according to the description of the copolymer blocks (B/S)_{B} of the block copolymer B is from 10 000 to 40 000 g/mol.

7. Mixture according to any of Claims 1 to 6, **characterized in that** the copolymer blocks (B/S)_{A} and (B/S)_{B} of the block copolymers A and B have random distribution of the vinylaromatic monomers and dienes.

8. Mixture according to Claim 1, where the star of the star-shaped block copolymer B has in essence short branches of structure Sₑ-(B/S)_{B} and long branches of structure (B/S)_{A}-Sᵢ-(B/S)_{B}, linked by way of the soft blocks (B/S)_{B}, and prior to the linkage a short polystyrene block having number-average molar mass Mₙ less than 2500 g/mol is incorporated.

9. Use of the mixture according to any of Claims 1 to 8 for the production of shrink films.

10. Shrink film, produced from a mixture according to any of Claims 1 to 8.

## Revendications

1. Mélange contenant :
a) 5 à 95 % en poids d'un copolymère A, qui contient une ou plusieurs séquences copolymères (B/S)_{A} constituées chacune par 65 à 95 % en poids de monomères aromatiques de vinyle et 35 à 5 % en poids de diènes et ayant une température de transition vitreuse Tg_{A} déterminée selon la description dans la plage allant de 40 à 90 °C,
b) 95 à 5 % en poids d'un copolymère séquencé B, qui contient au moins une séquence dure S constituée par 95 à 100 % en poids de monomères aromatiques de vinyle et 0 à 5 % en poids de diènes, une ou plusieurs séquences copolymères (B/S)_{A} constituées chacune par 65 à 95 % en poids de monomères aromatiques de vinyle et 35 à 5 % en poids de diènes et ayant une température de transition vitreuse Tg_{A} dans la plage allant de 40 à 90 °C, et une ou plusieurs séquences copolymères (B/S)_{B} constituées chacune par 20 à 60 % en poids de monomères aromatiques de vinyle et 80 à 40 % en poids de diènes et ayant une température de transition vitreuse Tg_{B} dans la plage allant de -80 à 0 °C,
c) 0 à 45 % en poids de polymères thermoplastiques C différents de A et B, et
d) 0 à 6 % en poids d'adjuvants d'usinage D,
la somme de A à D étant de 100 % en poids ;
- les séquences dures S du copolymère séquencé B présentant une masse molaire moyenne en nombre Mₙ, déterminée selon la description, dans la plage allant de 5 000 à 30 000 g/mol ;
- le copolymère séquencé B présentant une structure en étoile avec des séquences dures terminales Sₑ et (B/S)_{A}, et la proportion de la somme de toutes les séquences dures S et (B/S)_{A} étant d'au moins 40 % en poids, par rapport au copolymère séquencé en étoile B total; et
- le copolymère séquencé en étoile B comprenant principalement des bras d'étoile courts de la structure Sₑ-(B/S)_{B} et des bras d'étoile longs de la structure (B/S)_{A}-Sᵢ-(B/S)_{B}, qui sont reliés par les séquences souples (B/S)_{B}.

2. Mélange selon la revendication 1, **caractérisé en ce qu'**il contient :
a) 30 à 50 % en poids du copolymère A,
b) 70 à 50 % en poids du copolymère séquencé B, et
c) 0 à 20 % en poids de polymères thermoplastiques C.

3. Mélange selon la revendication 1 ou 2, **caractérisé en ce que** les séquences copolymères (B/S)_{A} du copolymère séquencé A présentent une masse molaire moyenne en poids M_{w} déterminée selon la description dans la plage allant de 150 000 à 300 000.

4. Mélange selon l'une quelconque des revendications 1 à 3, **caractérisé en ce que** les séquences copolymères (B/S)_{A} des copolymères séquencés A et B présentent une température de transition vitreuse dans la plage allant de 50 à 80 °C.

5. Mélange selon l'une quelconque des revendications 1 à 4, **caractérisé en ce que** le copolymère A est constitué par une séquence copolymère (B/S)_{A} de 85 à 93 % en poids de styrène et 7 à 15 % en poids de butadiène.

6. Mélange selon l'une quelconque des revendications 1 à 4, **caractérisé en ce que** les séquences copolymères (B/S)_{B} du copolymère séquencé B présentent une masse molaire moyenne en nombre Mₙ déterminée selon la description dans la plage allant de 10 000 à 40 000 g/mol.

7. Mélange selon l'une quelconque des revendications 1 à 6, **caractérisé en ce que** les séquences copolymères (B/S)_{A} et (B/S)_{B} des copolymères séquencés A et B présentent une distribution statistique des monomères aromatiques de vinyle et des diènes.

8. Mélange selon la revendication 1, dans lequel le copolymère séquencé en étoile B comprend principalement des bras d'étoile courts de la structure Sₑ-(B/S)_{B} et des bras d'étoile longs de la structure (B/S)_{A}-Sᵢ-(B/S)_{B}, qui sont reliés par les séquences souples (B/S)_{B}, et une séquence de polystyrène plus courte ayant une masse molaire moyenne en nombre Mₙ inférieure à 2 500 g/mol est incorporée avant la liaison.

9. Utilisation du mélange selon l'une quelconque des revendications 1 à 8 pour la fabrication de films rétractables.

10. Film rétractable, fabriqué à partir d'un mélange selon l'une quelconque des revendications 1 à 8.
